# EUROPÄISCHE PATENTANMELDUNG

(11) **EP 2 181 741 A1**
(43) Veröffentlichungstag der Anmeldung: **05.05.2010**
(21) Anmeldenummer: 08405296.8
(22) Anmeldetag: 01.12.2008
(51) Int. Cl.: A63F 13/06

(54) **Fahrrad als Computer - Spielekonverter**

(30) Priorität: 03.11.2008 CH 17282008
(71) Anmelder: ITrona GmbH, CH-6432 Rickenbach (CH); Eberli, David, CH-6432 Rickenbach (CH); Eberli, Arnold, CH-6432 Rickenbach (CH)
(72) Erfinder: Eberli, David, CH-6432 Rickenbach (CH); Eberli, Arnold, CH-6432 Rickenbach (CH)

(57) **Zusammenfassung**

Die Erfindung betrifft eine Vorrichtung mit der Funktion eines Spielekontrollers, insbesondere eines Joysticks. Anstelle eines Joysticks wird als Eingabegerät ein Fahrrad auf einer Fahrradrolle genutzt.

Dazu wird vom Fahrrad die Geschwindigkeit und die Lenkbewegung mittels Sensoren abgenommen und via USB Schnittstelle auf einen Computer übertragen. Mit dieser Erfindung kann ein Computerspiel, insbesondere ein Rennspiel, gesteuert und gespielt werden. Somit wird ein Heimtraining auf der Fahrradrolle um den wichtigen Faktor Spass erweitert.

## Beschreibung

### Technisches Gebiet

Die Erfindung betrifft ein Gerät zur Steuerung eines Computer - Spiels mit Hilfe eines Fahrrades auf einer Fahrradrolle.

### Stand der Technik

Bislang werden Fahrradrollentrainer nur als Trainingsgeräte eingesetzt. Dabei wird nur die Trittbewegung (Muskelkraft) genutzt. Die Lenkbewegung wird dabei nicht genutzt.

Es sind auch Fahrradrollentrainer bekannt, welche die Lenkbewegung abnehmen. Diese implementieren jedoch keinen Spielekontroller.

### Darstellung der Erfindung

Diese Erfindung betrifft ein Spielekontroller für Computer, welche als Eingabegerät ein Fahrrad nutzt. Das Fahrrad muss dazu auf einer Fahrradrolle montiert sein.

Von diesem Fahrrad wird mittels Sensoren die Geschwindigkeit und die Lenkbewegung abgenommen und ausgewertet. Die ermittelten Daten werden über eine USB Schnittstelle an einen Computer gesendet. Die Erfindung wird vom Computer automatisch als Spielekontroller erkannt. So können auf dem Computer Spiele, insbesondere Rennspiele, mit der Erfindung gesteuert und gespielt werden. Somit wird das Heimtraining auf Fahrrad um die Faktoren Spiel und Spass erweitert. Dadurch, dass ein Benutzer mit seinem Fahrrad die Geschwindigkeit und die Lenkung eines Spiels steuern kann, wird das Training interessanter und macht mehr Spass. So wird der Trainingseffekt gefördert.

### Kurze Beschreibung der Abbildungen der Zeichnungen

Anhand der beiliegenden schematischen Zeichnungen wird die Erfindung Beispielweise erläutert.

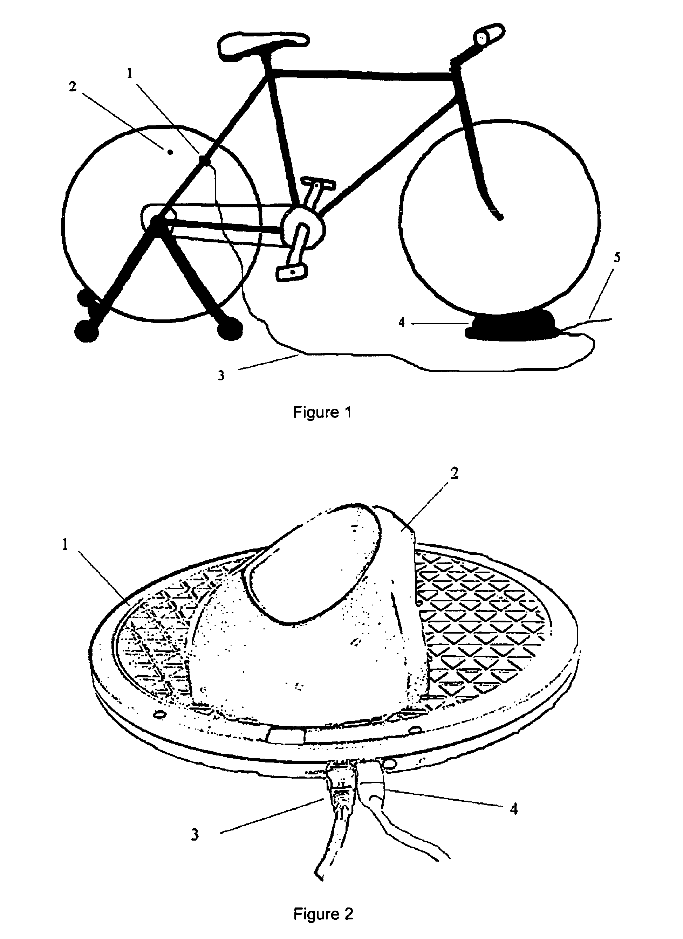

Fig. 1 zeigt eine seitliche Darstellung der Erfindung. Zur Erfindung gehören ein Geschwindigkeitssensor (1) am Hinterrad und ein oder mehrere Magnet(e) (2) am Hinterrad. Der Geschwindigkeitssensor ist mit einem Kabel (3) oder einer Funkübertragung mit der Zentraleinheit (4) verbunden. Diese Zentraleinheit unter dem Vorderrad ist drehbar und sorgt dafür, dass der Fahrer lenken kann. In dieser Einheit befindet sich die Mikrocontrollereinheit, welche die Daten auswertet und sie über ein USB Kabel (5) zum Computer sendet. Ebenfalls kann die Zentraleinheit über die USB Schnittstelle (5) Daten (z.b. Parameter für Geschwindigkeit, Bremsen, Lenkung rechts / links etc.) vom Computer empfangen.

Fig. 2 zeigt eine Darstellung der Zentraleinheit. Dazu gehört ein Drehteller (1) welcher sich nach links und rechts drehen lässt. Auf diesem Drehteller ist eine Radhalterung (2) montiert. Diese Radhalterung gibt dem Fahrradrad halt und verhindert, dass das Rad wegrutschen kann. Die Mikrocontrollereinheit im Drehteller ist mit einem Kabel (3) mit dem Geschwindigkeitssensor verbunden. Mit USB Kabel (4) wird eine Verbindung zu einem Computer hergestellt.

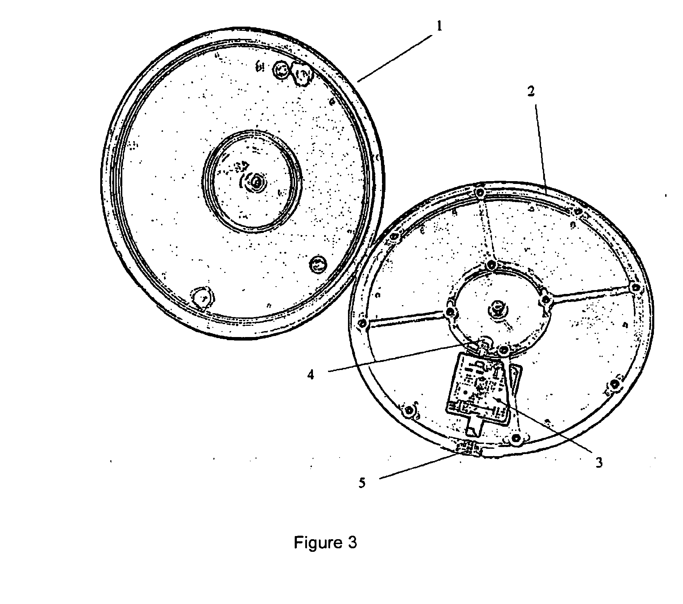

Fig. 3 zeigt eine Darstellung mit geöffnetem Drehteller. Dieser besteht aus einem Drehtelleroberteil (1), auf welchem die Radhalterung befestigt ist sowie einem Drehtellerunterteil (2) welches die Mikrocontrollereinheit (3) beinhaltet. Ein Magnet (4) ist am Drehbaren Oberteil befestigt. Über diesen Magneten (4) wird die Lenkbewegung auf die Mikrocontrollereinheit (3) übertragen. Die Mikrocontrollereinheit besteht aus einem Magnetfeldsensor, einem Anschluss (5) für den Geschwindigkeitssensor, einem Mikrocontroller und einem USB Anschluss (5) für die Verbindung zum Computer. Die Mikrocontrollereinheit (3) kann die Lenkbewegung der Halterung für das Fahrrad auch optisch oder mit einem Hallsensor erfassen.

### Bester Weg zur Ausführung der Erfindung

Diese Erfindung setzt ein Fahrrad, sowie eine Fahrradrolle voraus. Die Erfindung besteht aus mehreren Teilen und wird am Fahrrad befestigt. Am Hinterrad wird ein Geschwindigkeitssensor angebracht. Das Vorderrad wird auf eine Drehvorrichtung gelegt. Die Mikrokontrollerheinheit, welche sich in der Drehvorrichtung befindet, misst die Lenkbewegung und sendet die Daten an einem Computer.

Die aktuelle Geschwindigkeit wird durch den Magnetschalter ermittelt. Bei jeder Rad Umdrehung passiert ein Magnet am Rad den Magnetschalter und löst einen elektrischen Impuls aus. Mit der Zeit zwischen zwei Impulsen kann die aktuelle Geschwindigkeit berechnet werden. Der Magnetschalter ist mit einem Kabel oder per Funkübertragung mit der Mikrocontrollereinheit verbunden.

Wurde die Fahrradbremse betätigt, wird der zeitliche Abstand zweier Impulse deutlich grösser, somit kann eine Bremsbewegung ermittelt werden.

Das Vorderrad liegt auf einer Vorrichtung auf, welche sich nach links und rechts schwenken lässt. So ist garantiert, dass der Fahrer wie auf der Strasse lenken kann. Ebenfalls auf der drehbaren Vorrichtung ist ein Magnet befestigt.

In der Drehvorrichtung ist die Mikrocontrollereinheit befestigt. Auf dieser Mikrokontrollereinheit ist ein Magnetsensor angebracht. Dieser Sensor misst die magnetische Feldstärke des Magneten welcher auf der Drehvorrichtung angebracht ist. So kann die Position der Lenkung berechnet werden.

Die Position der Lenkung kann auch optisch oder mit einem Hallsensor erfasst und von der Mikrokontrollereinheit berechnet werden.

Ebenfalls auf der Mikrokontrollereinheit ist der Mikroprozessor, den Anschluss für den Magnetschalter und den USB Anschluss für den Computer angebracht.

Der Mikrocontroller implementiert ein USB - HID Gerät. Somit kann diese Vorrichtung automatisch von einem Computer als Spielekontroller (Joystick) erkannt werden. Damit kann auf einem Computer eine Y Achse (Beschleunigung / Bremsen) und eine X Achse (links / rechts) für die Steuerung diverser Computerspiele, vorzugsweise Autorennspiele, genutzt werden.

So wird das Heimtraining auf einem Fahrradrollentrainer um die Faktoren Spiel und Spass erweitert.

## Patentansprüche

1. Spielekontroller zur Steuerung eines Computerspiels, **dadurch gekennzeichnet, dass** als Eingabeeinheit ein Fahrrad auf einer Fahrradrolle genutzt wird.

2. Spielekontroller gemäss Anspruch 1, **dadurch gekennzeichnet, dass** die Geschwindigkeit (positive und negative) sowie die Lenkbewegung auf dem Computer übertragen werden kann.

3. Spielekontroller gemäss Anspruch 1, **dadurch gekennzeichnet, dass** für die Geschwindigkeitsabnahme ein Magnetschalter genutzt wird

4. Spielekontroller gemäss Anspruch 1, **dadurch gekennzeichnet, dass** für die Abnahme der Lenkbewegung ein Magnetfeld-, ein Optischer- oder Hallsensor genutzt wird

5. Spielekontroller gemäss Anspruch 1, **dadurch gekennzeichnet**, er mit einem USB Kabel mit einem Computer verbunden ist, und einen Joystick emuliert.
